# EUROPÄISCHE PATENTANMELDUNG

(11) **EP 2 930 624 A1**
(43) Veröffentlichungstag der Anmeldung: **14.10.2015**
(21) Anmeldenummer: 15163019.1
(22) Anmeldetag: 09.04.2015
(51) Int. Cl.: G06F 11/263

(54) **VERFAHREN UND VORRICHTUNG ZUM ERZEUGEN UND ABARBEITEN VON TESTFÄLLEN**

(30) Priorität: 10.04.2014 DE 102014105109
(71) Anmelder: PHOENIX CONTACT GmbH & Co. KG, 32825 Blomberg (DE)
(72) Erfinder: Grund, Julian, 32657 Lemgo (DE); Koop, Harry, 32791 Lage (DE); Frank, Tobias, Dr., 32657 Lemgo (DE)
(74) Vertreter: Blumbach Zinngrebe

(57) **Zusammenfassung**

Die Erfindung sieht zum vereinfachten Ausführen eines Tests eines Funktionsbausteins (130) einer speicherprogrammierbaren Steuerung (100) ein Verfahren zum automatischen Erzeugen einer Testfallliste (650) vor, wobei ein mittels einer Modellierungssprache erstelltes Modell (610) des zu testenden Funktionsbausteins (130) in ein Meta-Modell umgewandelt wird, durch welches ein Zustandsautomat definiert wird, je ein Testfall für jede Kombination eines ersten und eines zweiten Eingangsabbildes und für jeden Zustand des Zustandsautomaten, welcher vom Startzustand durch eine mit dem ersten Eingangsabbild endende Folge von Eingangsabbildern erreichbar ist, erzeugt wird, und eine von einem Testautomaten ausführbaren Testfallliste (650) aus den erzeugten Testfällen erstellt wird.

Ferner sieht die Erfindung eine Vorrichtung, ein System und ein digitales Speichermedium mit darauf gespeicherten Anweisungen zum Ausführen des Verfahrens vor.

## Beschreibung

Die Erfindung betrifft allgemein die Automatisierungstechnik, und insbesondere ein Verfahren und eine Vorrichtung zum Erzeugen von Testfalllisten zum Testen eines Funktionsbausteins einer speicherprogrammierbaren Steuerung zur Steuerung sicherheitskritischer Prozesse.

In der Automatisierungstechnik erfolgt die Prozesssteuerung häufig mittels einer speicherprogrammierbaren Steuereinrichtung (SPS), die über ein Kommunikationssystem mit dezentralen E/A-Modulen zur Ansteuerung von Aktoren und Sensoren verbunden ist. Zum Schutz von Mensch, Maschine oder Umwelt ist es dabei häufig notwendig, Sicherheitsfunktionen zu realisieren, wie die Abschaltung einer Maschine nach Öffnen einer Schutztür oder Betätigung eines Not-Aus-Schalters.

Funktionsbausteine für speicherprogrammierbare Steuerungen (SPS), welche eine Sicherheitsfunktion im Sinne der funktionalen Sicherheit gemäß einem vorgegebenen Standard, zum Beispiel nach IEC 61508 bzw. einer von dieser abgeleiteten Norm, erfüllen, müssen vollständig auf ihre korrekte Implementierung getestet werden, was das Erstellen umfangreicher Testfalllisten erfordert. Diese Funktionsbausteine sind im Allgemeinen mittels eines semiformalen Modells spezifiziert, beispielsweise mittels eines UML-Zustandsübergangsdiagramms (UML: Unified Modeling Language).

Es sind modellgetriebene Testverfahren und Testwerkzeuge wie zum Beispiel die Klassifikationsbaum-Methode bekannt, die aus semiformalen Modellen Testskripte erzeugen können. Wenngleich diese Verfahren im Allgemeinen eine Testautomatisierung beinhalten, erfordern sie trotzdem einen nennenswerten manuellen Anteil, wie zum Beispiel das Definieren von Äquivalenzklassen, das Konfigurieren von Testparametern oder die Implementierung spezifischer Testalgorithmen je Modellbaustein.

Aus EP 1 622 022 A1 ist eine Vorrichtung und ein Verfahren bekannt, mittels dessen die automatische Erzeugung einer optimalen Anzahl von Testfällen für das Testen einer Softwarefunktion ermöglicht wird, wobei durch Analyse des Source-Codes Äquivalenzklassen ermittelt werden.

Der Erfindung liegt die Aufgabe zugrunde, einen Weg aufzuzeigen, wie ein Funktionsbaustein einer zum Ausführen von Sicherheitsfunktionen ausgebildeten SPS auf einfache und flexible Weise und mit einem hohen Automatisierungsgrad getestet werden kann, insbesondere unter Verwendung einer auf einer semiformalen Modellierungssprache basierenden Spezifikation des Funktionsbausteins.

Die oben genannte technische Aufgabe wird durch ein Verfahren zum automatischen Erzeugen einer Testfallliste gemäß Anspruch 1, eine Vorrichtung zum automatischen Erzeugen einer Testfallliste gemäß Anspruch 9, sowie durch ein System gemäß Anspruch 14 und ein digitales Speichermedium gemäß Anspruch 15 gelöst.

Die Erfindung wird nachfolgend beispielhaft anhand bevorzugter Ausführungsformen und unter Bezugnahme auf die beigefügten Zeichnungen genauer beschrieben. Dabei bezeichnen gleiche Bezugszeichen in den Zeichnungen gleiche oder ähnliche Teile. Es zeigen:
- Fig. 1: eine schematische Darstellung eines Steuersystems zur Prozesssteuerung mit einer speicherprogrammierbaren Steuerung (SPS),
- Fig. 2: eine schematische Darstellung des Aufbaus eines Programms einer SPS,
- Fig. 3: eine schematische Darstellung des Ablaufs einer bevorzugten Ausführungsform eines erfindungsgemäßen Verfahrens,
- Fig. 4: eine schematische Darstellung eines UML-Modells eines beispielhaften Funktionsbausteins, und

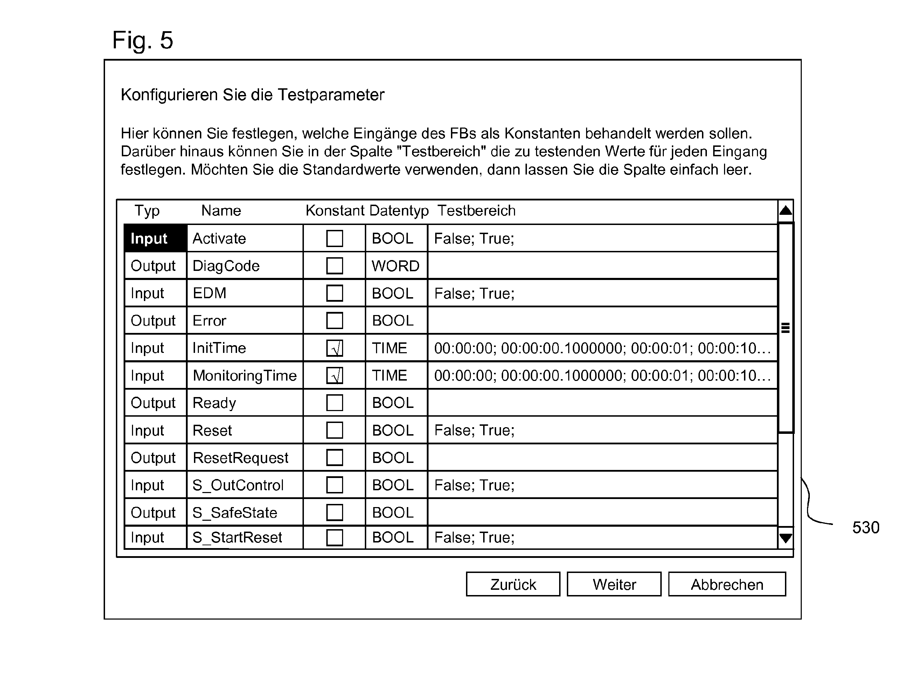

- Fig. 5: eine schematische Darstellung einer Anzeige einer Benutzerschnittstelle zur Festlegung von Eingangswerten.

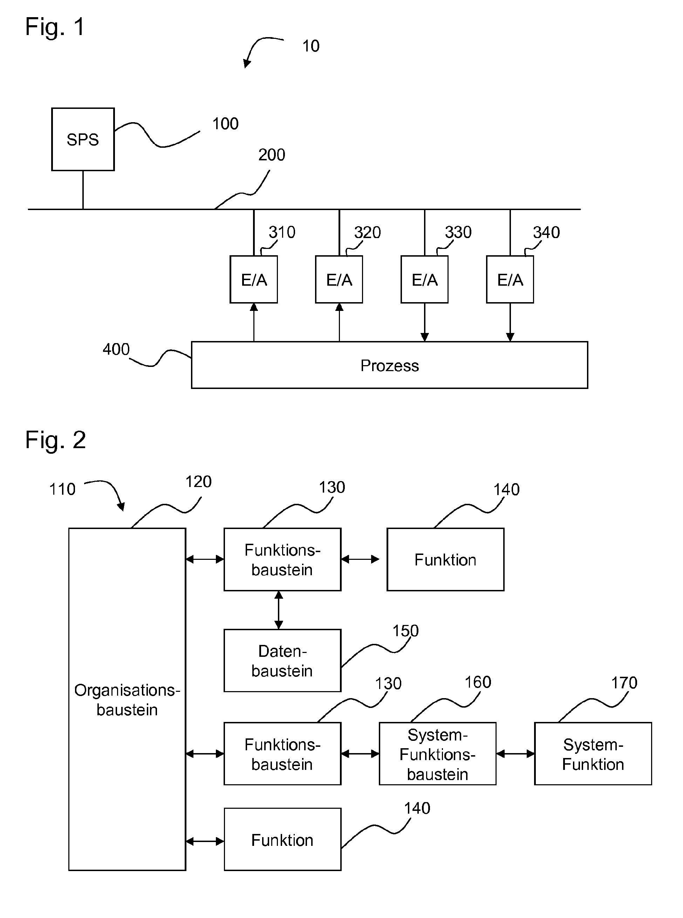

In Fig. 1 ist der prinzipielle Aufbau eines Steuersystems 10 zur Steuerung eines Prozesses 400 dargestellt, wobei Sensoren und Aktoren des Prozesses über E/A-Module 310, 320, 330 und 340 angesprochen werden, welche von einer speicherprogrammierbaren Steuerung (SPS) 100 gesteuert werden, wobei die SPS 100 zu diesem Zweck über ein Kommunikationsnetzwerk 200, beispielsweise einen Feldbus, mit den E/A-Modulen verbunden ist. Im dargestellten Beispiel sind die E/A-Module 310 und 320 als Eingangs-Module zum Erfassen von Sensorwerten und die E/A-Module 330 und 340 als Ausgangs-Module zur Ansteuerung von Aktoren wie zum Beispiel Maschinen oder Motoren ausgebildet. Zur Gewährleistung der Sicherheit von Mensch, Maschine oder Umwelt führt die SPS im dargestellten Ausführungsbeispiel Sicherheitsfunktionen aus.

Das Programm einer SPS wird in der Regel strukturiert programmiert und umfasst dementsprechend einzelne, in sich abgeschlossene Programmabschnitte, sogenannte Bausteine, welche einzelnen Teilfunktionen des Prozesses entsprechen.

In Fig. 2 ist schematisch ein beispielhafter Aufbau eines zur Ausführung auf einer SPS 100 ausgebildeten Anwenderprogramms 110 dargestellt. Das mit Hilfe des Betriebssystems der SPS 100 ausführbare Anwenderprogramm 110 umfasst im dargestellten Beispiel einen Organisations-Baustein 120, welcher den Programmablauf regelt. Die Funktionsbausteine 130 umfassen das eigentliche Anwenderprogramm und können bei jedem Aufruf mit unterschiedlichen Daten versorgt werden. Diese Daten und interne Variable und Ergebnisse werden in einem dem jeweiligen Funktionsbaustein 130 zugeordneten Datenbaustein 150 hinterlegt und vom System automatisch verwaltet. Funktionen 140 umfassen Programmroutinen für häufig verwendete Funktionen. System-Funktionsbausteine 160 und Systemfunktionen 170 sind Funktionsbausteine bzw. Funktionen, welche im Betriebssystem integriert sind.

Funktionsbausteine 130 können vorteilhaft mittels einer semiformalen Modellierungssprache wie einem UML-Zustandsübergangsdiagramm spezifiziert werden.

Die Erfindung sieht vor, eine Testfallliste für einen Funktionsbaustein 130 zu erzeugen, die einen vollständigen Test des Funktionsbausteins ermöglicht, wobei als Eingabe ausschließlich das dem zu testenden Funktionsbaustein zugrunde liegende Modell als Eingabe erforderlich ist.

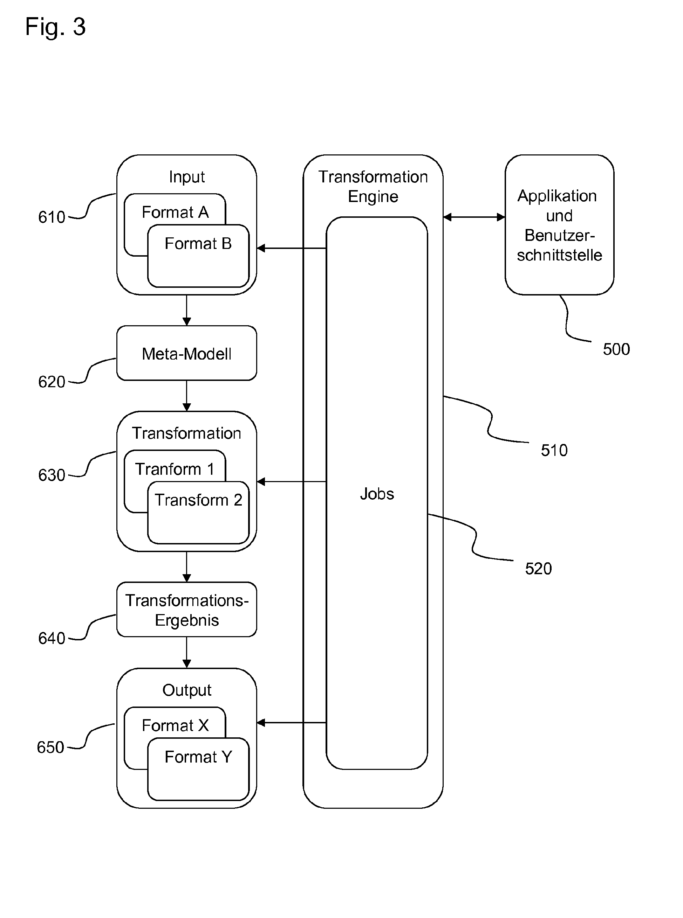

Der Ablauf einer bevorzugten Ausführungsform eines erfindungsgemäßen Verfahrens ist schematisch in Fig. 3 dargestellt.

Die Erfindung sieht ein Verfahren zum automatischen Erzeugen einer Testfallliste zum Ausführen eines Tests eines Funktionsbausteins einer speicherprogrammierbaren Steuerung vor, wobei ein mittels einer Modellierungssprache erstelltes Modell 610 des zu testenden Funktionsbausteins in ein Meta-Modell 620 umgewandelt wird.

Als Modellierungssprache wird insbesondere eine semiformale Modellierungssprache wie zum Beispiel ein UML-Zustandsübergangsdiagramm oder eine andere geeignete semiformale Modellierungssprache verwendet. Die Umwandlung in ein Meta-Modell ermöglicht ein automatisches Erzeugen von Testfällen unabhängig von der verwendeten Modellierungssprache.

Durch das Meta-Modell 620, welches vorzugsweise aus einer XMI-Datei (XMI: XML Metadata Interchange) generiert wird, wird ein Zustandsautomat mit einer Menge von Eingängen, einer Menge von Zuständen und einer Menge von Zustandsübergängen definiert, wobei einer der Zustände als Startzustand definiert ist, jedem Eingang eine Menge von Eingangswerten zugeordnet ist, und ein Zustandsübergang durch einen ersten und einen zweiten Zustand und durch eine Übergangsbedingung definiert ist, wobei der Zustandsautomat vom ersten in den zweiten Zustand wechselt, wenn die Übergangsbedingung erfüllt ist, und wobei ein Eingangsabbild jedem Eingang einen Eingangswert zuordnet.

Basierend auf diesem durch das Meta-Modell 620 definierten Zustandsautomaten sieht das Verfahren vor, für jede Kombination eines ersten und eines zweiten Eingangsabbildes und für jeden Zustand, welcher vom Startzustand durch eine mit dem ersten Eingangsabbild endende Folge von Eingangsabbildern erreichbar ist, einen Testfall zu erzeugen und aus diesen Testfällen eine von einem Testautomaten ausführbare Testfallliste 650 zu erstellen. Die Testfallliste kann beispielsweise im CSV-Format (CSV: Comma separated values) erstellt werden.

Die Übergangsbedingung eines Zustandsübergangs von einem ersten in einen zweiten Zustand ist vorzugsweise als boolescher Ausdruck in Abhängigkeit des aktuell angelegten Eingangsabbildes und des vorherigen Eingangsabbildes definiert, so dass ein Zustandsübergang beispielsweise auch in Abhängigkeit einer Signalflanke erfolgen kann. Sofern in einem Zustand die Übergangsbedingungen mehrerer Zustandsübergänge gleichzeitig erfüllt sein können, ist den durch das Meta-Modell definierten Zustandsübergängen vorteilhaft jeweils eine Priorität zugeordnet, wobei jeweils der Zustandsübergang mit der höchsten Priorität ausgeführt wird.

Ein Testfall umfasst insbesondere Testschritte, welche jeweils ein anzulegendes Eingangsabbild und ein nach

Anlegen des Eingangsabbildes erwartetes Ausgangsabbild definieren, wobei das erwartete Ausgangsabbild durch den jeweils erreichten Zustand definiert ist und jedem Ausgang einer vorgegebenen Menge von Ausgängen einen Ausgangswert zuordnet.

Um eine Mehrzahl von Testfällen einer Testfallliste auf einfache Weise nacheinander abarbeiten zu können, umfasst jeder Testfall vorzugsweise wenigstens einen Initialisierungs-Testschritt zum Erreichen eines ersten Zustands vom Startzustand durch eine mit dem ersten Eingangsabbild endende Folge von Eingangsabbildern, einen Testschritt, in welchem das zweite Eingangsabbild angelegt wird, und wenigstens einen Testschritt zum Zurücksetzen in den Startzustand.

In einer vorteilhaften Ausführungsform ist wenigstens einem durch das Meta-Modell definierten Zustand eine Vorschrift zugeordnet, mittels der das durch den Zustand definierte erwartete Ausgangsabbild in Abhängigkeit des jeweils angelegten Eingangsabbildes ermittelbar ist. Die Vorschrift ist vorzugsweise als Berechnungsvorschrift in Abhängigkeit der Eingangswerte des aktuell anliegenden Eingangsabbildes definiert. Zu diesem Zweck kann die Vorschrift vorteilhaft als Programmcode in einer vorgegebenen Programmiersprache definiert sein. Dieser Programmcode wird während der Testfallgenerierung ausgeführt, um die erwarteten Ergebnisse aller Testfälle zu diesem Zustand dynamisch, basierend auf dem Eingangsabbild, zu berechnen.

Bezugnehmend auf Fig. 3 sieht das Verfahren dementsprechend vorteilhaft vor, dass ein konkretes Modell 610 eingelesen wird und in ein für die Problemstellung allgemeingültiges Meta-Modell 620 übersetzt wird. Auf diesem Meta-Modell 620 wird die eigentliche Transformation 630 angewendet, welche einen Algorithmus zur Testfallerzeugung ausführt, wobei durch eine Mehrzahl von Transformationen entsprechende Testfälle erzeugt werden. Das Ergebnis 640 dieser Transformation in Form einer Vielzahl von Testfällen wird anschließend als Testfallliste in ein vorgegebenes Ausgabeformat übersetzt und als Ausgabe 650 bereitgestellt. Diese Ausgabe 650 kann dann als Eingabe für einen Testautomaten dienen. In dem in Fig. 3 dargestellten Ausführungsbeispiel wird das Verfahren mittels einer Transformations-Engine 510 ausgeführt, welche die einzelnen Schritte als Jobs 520 ausführt. Die Transformations-Engine 510 wird von einer auf einem Computer ausgeführten Applikation 500 ausgeführt, durch welche auch eine Benutzerschnittstelle bereitgestellt wird.

Die Erfindung sieht somit vorteilhaft vor, aus einem semiformalen Modell vollständige Testfalllisten zu erzeugen und die generierten Testfälle mittels eines Testautomaten auf einer sicheren SPS durchzuführen. Alternativ kann die sichere SPS auch unter Verwendung einer SoftSPS simuliert werden und die generierten Testfälle können mittels des Testautomaten auf der SoftSPS durchgeführt werden.

In einer bevorzugten Ausführungsform des Verfahrens ist vorgesehen, zum Erzeugen der Testfälle für jeden Zustand die kürzeste mit dem ersten Eingangsabbild endende Folge von Eingangsabbildern zu ermitteln, mit welcher der Zustand vom Startzustand erreichbar ist, um die zur Ausführung des jeweiligen Testfalls erforderlichen Testschritte zu reduzieren.

Ein zu testender Funktionsbaustein kann ein zeitabhängiges Verhalten beinhalten. Für diesen Fall wird besonders vorteilhaft wenigstens einem Zustand ein zeitabhängiges Verhalten zugeordnet und es werden in Abhängigkeit des zeitabhängigen Verhaltens wenigstens zwei Testfälle für diesen Zustand und für jede Kombination eines ersten und eines zweiten Eingangsabbildes erzeugt, sofern der Zustand vom Startzustand durch eine mit dem ersten Eingangsabbild endende Folge von Eingangsabbildern erreichbar ist. Dies ermöglicht besonders vorteilhaft das Verarbeiten semiformaler Modelle, welche definieren, dass das Verhalten eines Zustands von wenigstens einem Timer abhängt.

Vorteilhaft kann das zeitabhängige Verhalten des Zustands durch wenigstens eine Schaltzeit definiert sein, wobei das Verfahren für diesen Fall vorteilhaft vorsieht, dass für jede definierte Schaltzeit wenigstens ein Testfall mit einer zugeordneten Wartezeit, die kürzer als die Schaltzeit ist, und wenigstens ein Testfall mit einer zugeordneten Wartezeit, die länger als die Schaltzeit ist, erzeugt wird. In dieser Ausführungsform wird durch einen Testschritt eines Testfalls vorzugsweise zusätzlich eine Wartezeit definiert, wobei das erwartete Ausgangsabbild nach Anlegen des jeweiligen Eingangsabbilds und nach Ablaufen der Wartezeit erwartet wird.

Im Folgenden wird eine vorteilhafte Ausgestaltung des Verfahrens nochmals mit anderen Worten beschrieben.

Vor der eigentlichen Testfallgenerierung auf Basis des durch dass Meta-Modell 620 definierten Zustandsautomaten A mit den Eingängen I, den Zuständen Z und den Zustandsübergängen T, werden alle generell möglichen Eingangsabbilder I' ermittelt. Für die Testfallgenerierung werden alle Eingangsabbilder miteinander kombiniert, so dass jedes Eingangsabbild als Vorgängerabbild I_{P} mit jedem Eingangsabbild als Testabbild I_{T} kombiniert ist. Es wird für jede Kombination aus I_{P} und I_{T} in jedem Zustand Z ein Testfall erzeugt. Definiert das semiformale Modell 610, dass das Verhalten eines Zustands von mindestens einem Timer abhängig ist, werden zudem für jede Kombination von I_{P} und I_{T} Testfälle generiert, die das Ablaufen bzw. Nicht-Ablaufen des Timers abdecken.

Dies lässt sich wie folgt in Pseudo-Code zusammenfassen:
I' = Alle möglichen Wertekombinationen aller Eingänge I Für jeden Zustand Z in A:
   Für jedes mögliche Eingangsabbild I_{P} in I':
      Finde kürzesten Weg W, um Z vom Startzustand zu erreichen, so dass I_{P} anliegt. Wenn W gefunden, dann:
         Für jedes mögliche Eingangsabbild I_{T} in I':
            Wenn Z zeitabhängig, dann:
               Für jede Schaltzeit t in Z:
                  Generiere Testfall mit I_{T} und Wartezeit t
                  Generiere Testfall mit I_{T} und Wartezeit t-1 Sonst:
                     Generiere Testfall mit I_{T} ohne Wartezeit Sonst:
         Kein Testfall

### (Kombination I_{P} in Z laut Modell nicht möglich)

Ein Testfall besteht aus Testschritten zur Initialisierung, insbesondere zum Erreichen des Zustands Z durch eine mit I_{P} endende Folge von Eingangsabbildern, einem Testschritt, in welchem das Eingangsabbild I_{T} angelegt wird und Testschritten zum Zurücksetzen in den Startzustand. Ein Testschritt definiert vorzugsweise ein anzulegendes Eingangsabbild, eine Wartezeit und ein nach Anlegen des Eingangsabbilds und Ablaufen der Wartezeit erwartetes Ausgangsabbild, welches insbesondere durch den jeweils erreichten Zustand Z definiert ist.

Das Ergebnis dieser Testfallgenerierung dient im nächsten Schritt als Eingabe für einen Testautomaten. Für den Testautomaten wird vorzugsweise ein einfaches Skript erstellt, welches generische Anweisungen je Testschritt definiert. Bei der Testausführung werden diese Anweisungen für jeden Testschritt auf der sicheren SPS angewendet. Die Ergebnisse jedes Testschritts werden von der SPS zurückgelesen, gesammelt und mit Abschluss der Testdurchführung in eine strukturierte Ausgabedatei gespeichert.

Dementsprechend sieht das Verfahren vorteilhaft vor, die erstellte Testfallliste mittels eines Testautomaten abzuarbeiten, welcher mit einer speicherprogrammierbaren Steuerung verbunden ist, dessen Programmierung den zu testenden Funktionsbaustein umfasst, und die Testergebnisse in einem strukturierten Dateiformat zu speichern. In einer alternativen Ausführungsform kann statt einer realen SPS auch eine SoftSPS eingesetzt werden, durch die eine reale SPS, dessen Programmierung den zu testenden Funktionsbaustein umfasst, simuliert wird. In dieser Ausführungsform ist der Testautomat zum Abarbeiten der erstellten Testfallliste vorteilhaft mit einer Einrichtung verbunden, welche die SoftSPS ausführt. Alternativ kann die SoftSPS auch auf dem Testautomaten selbst ausgeführt werden.

Um sicherzustellen, dass die Testdurchführung korrekt abgelaufen ist, wird für jede Teilaufgabe, d.h. das Einlesen des Testskripts, das Durchführen der Tests und das Schreiben einer Ergebnisdatei geprüft, dass die Teilaufgabe durchgeführt wurde, das Ergebnis der Teilaufgabe erfolgreich war, und jede Teilaufgabe in der richtigen Reihenfolge durchgeführt wurde. Nur wenn alle diese Bedingungen erfüllt sind, wird das Testergebnis als gültig anerkannt.

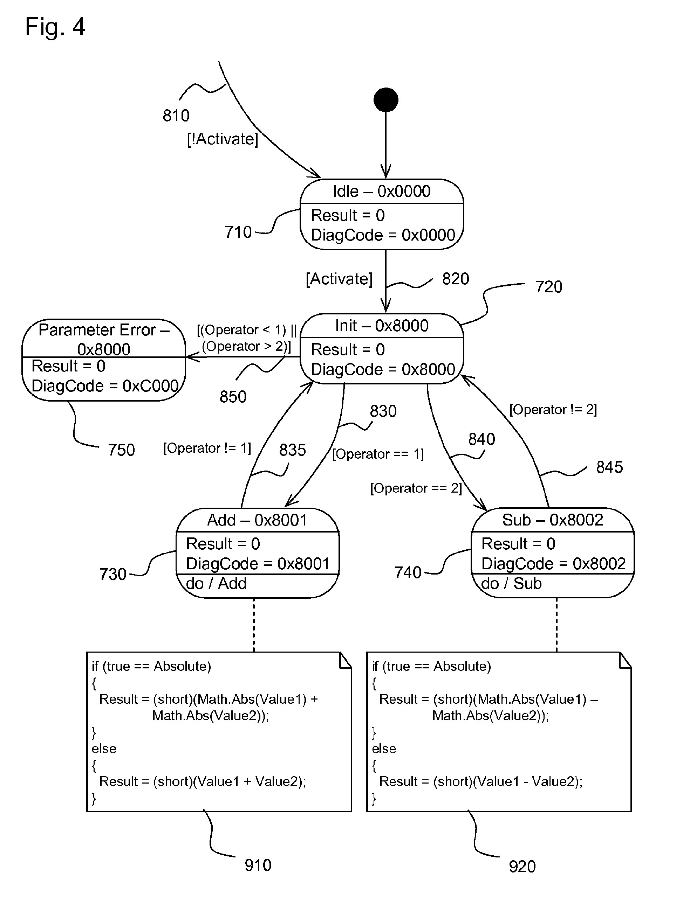

Fig. 4 zeigt beispielhaft und schematisch ein UML-Modell, welches in einer XMI-Datei abgespeichert die Eingabe zur Übersetzung in das Meta-Modell bilden kann. Der in Fig. 4 schematisch dargestellte Funktionsbaustein ist ein zur Laufzeit konfigurierbarer Addierer/Subtrahierer. Das Modell umfasst die Zustände 710, 720, 730, 740 und 750, wobei der Zustand 710 als Startzustand definiert ist. Die Menge der Eingänge umfasst die Eingänge "Activate", "Operator", "Value1", "Value2" und "Absolute", wobei die Eingänge "Activate" und "Absolute" vom Datentyp Boolean sind mit {TRUE, FALSE} als Menge möglicher Eingangswerte, und wobei die übrigen Eingänge vom Datentyp Integer sind mit einer vorgegebenen Menge ganzzahliger Werte als mögliche Eingangswerte. Die Menge der möglichen Eingangswerte des Eingangs "Operator" ist insbesondere die Menge {1, 2}. Jeder der Zustände 710, 720, 730, 740 und 750 definiert für die Ausgänge "Result" und "DiagCode" einen Ausgangswert. In den Zuständen 710, 720 und 750 wird den Ausgängen jeweils ein fester Wert zugewiesen. In den Zuständen 730 und 740 wird der Wert für den Ausgang "Result" mit einem festen Wert initialisiert und mittels einer Berechnungsvorschrift 910 bzw. 920 dynamisch in Abhängigkeit der Eingangswerte berechnet. Dargestellt sind in Fig.4 ferner die durch das Modell definierten Zustandsübergänge 810, 820, 830, 835, 840, 845 und 850 mit den jeweiligen Übergangsbedingungen, wobei der Zustandsübergang 810 einen Zustandsübergang darstellt, mittels dessen der Startzustand 710 von jedem anderen Zustand aus erreicht werden kann, wenn die Übergangsbedingung "Activate = FALSE" erfüllt ist.

Den Zustandsübergängen können auch Prioritäten zugeordnet sein. Ein Beispiel ist in der folgenden Tabelle angegeben, wobei ein kleinerer Wert eine höhere Priorität bezeichnet:

| **Quell-zustand** | **Zielzustand** | **Übergangs-Bedingung** | Priorität |
|---|---|---|---|
| Init | Parameter Error | (Operator < 1) ∥ (Operator > 2) | 1 |
| Init | Add | Operator == 1 | 2 |
| Init | Sub | Operator == 2 | 3 |
| Add | Init | Operator != 1 | 1 |
| Sub | Init | Operator != 2 | 1 |

Die in Fig. 4 und der obigen Tabelle verwendeten Operatoren haben folgende Bedeutung:
∥ ODER
== IST GLEICH
!= IST UNGLEICH

In einer vorteilhaften Ausführungsform kann vorgesehen sein, dass durch einen Benutzer mittels einer Benuterzschnittstelle für wenigstens einen Eingang wenigstens eine Äquivalenzklasse definiert wird und dem Eingang eine Menge von Eingangswerten in Abhängigkeit der wenigstens einen definierten Äquivalenzklasse zugeordnet wird. Eine Anzeige 530 einer solchen Benuterzschnittstelle ist beispielhaft und schematisch in Fig. 4 dargstellt. Werden keine Äquivalenzklassen angegeben, wird vorzugsweise der gesamte Wertebereich des jeweiligen Datentyps durch Testfälle abgedeckt.

Eine erfindungsgemäße Vorrichtung zum automatischen Erzeugen einer Testfallliste zum Ausführen eines Tests eines Funktionsbausteins einer speicherprogrammierbaren Steuerung umfasst Mittel zum automatischen Umwandeln eines mittels einer Modellierungssprache erstellten Modells des zu testenden Funktionsbausteins in ein Meta-Modell, wobei durch das Meta-Modell ein Zustandsautomat mit einer Menge von Eingängen, einer Menge von Zuständen und einer Menge von Zustandsübergängen definiert wird, wobei ein Zustand als Startzustand definiert ist, jedem Eingang eine Menge von Eingangswerten zugeordnet ist, ein Zustandsübergang durch einen ersten und einen zweiten Zustand und durch eine Übergangsbedingung definiert ist, wobei der Zustandsautomat vom ersten in den zweiten Zustand wechselt, wenn die Übergangsbedingung erfüllt ist, und wobei ein Eingangsabbild jedem Eingang einen Eingangswert zuordnet, sowie Mittel zum Erzeugen von Testfällen, dazu ausgebildet, je einen Testfall für jede Kombination eines ersten und eines zweiten Eingangsabbildes und für jeden Zustand, welcher vom Startzustand durch eine mit dem ersten Eingangsabbild endende Folge von Eingangsabbildern erreichbar ist, zu erzeugen und Mittel zum Erstellen einer von einem Testautomaten abarbeitbaren Testfallliste aus den erzeugten Testfällen.

Es liegt auch ein System zum Testen eines Funktionsbausteins einer speicherprogrammierbaren Steuerung im Rahmen der Erfindung, welches eine solche Vorrichtung und einen Testautomaten umfasst, wobei der Testautomat dazu ausgebildet ist, einen Test einer mit dem Testautomaten verbundenen speicherprogrammierbaren Steuerung durch Abarbeiten einer von der Vorrichtung erzeugten Testfallliste auszuführen.

Insbesondere ist die Vorrichtung und/oder das System zum Ausführen des oben beschriebenen Verfahrens ausgebildet Vorzugsweise umfasst die Vorrichtung und/oder das System alle erforderlichen Mittel zum Ausführen der oben beschriebenen Ausführungsformen eines erfindungsgemäßen Verfahrens oder deren Kombination.

Im Rahmen der Erfindung liegt ferner ein digitales Speichermedium mit darauf gespeicherten Anweisungen, welche dazu ausgebildet sind, ein Verfahren wie oben beschrieben auszuführen, wenn sie auf einem Computer ausgeführt werden.

## Patentansprüche

1. Verfahren zum automatischen Erzeugen einer Testfallliste (650) zum Ausführen eines Tests eines Funktionsbausteins (130) einer speicherprogrammierbaren Steuerung (100), mit den Schritten:
- automatisches Umwandeln eines mittels einer Modellierungssprache erstellten Modells (610) des zu testenden Funktionsbausteins (130) in ein Meta-Modell (620), wobei durch das Meta-Modell (620) ein Zustandsautomat mit einer Menge von Eingängen, einer Menge von Zuständen und einer Menge von Zustandsübergängen definiert wird, wobei
- ein Zustand als Startzustand definiert ist,
- jedem Eingang eine Menge von Eingangswerten zugeordnet ist, und
- ein Zustandsübergang durch einen ersten und einen zweiten Zustand und durch eine Übergangsbedingung definiert ist, wobei der Zustandsautomat vom ersten in den zweiten Zustand wechselt, wenn die Übergangsbedingung erfüllt ist, und wobei ein Eingangsabbild jedem Eingang einen Eingangswert zuordnet,
- Erzeugen je eines Testfalls für jede Kombination eines ersten und eines zweiten Eingangsabbildes und für jeden Zustand, welcher vom Startzustand durch eine mit dem ersten Eingangsabbild endende Folge von Eingangsabbildern erreichbar ist, wobei jeder Testfall ein erwartetes Ausgangsabbild umfasst, und
- Erstellen einer von einem Testautomaten ausführbaren Testfallliste (650) aus den erzeugten Testfällen.

2. Verfahren nach Anspruch 1, wobei ein Testfall Testschritte umfasst, welche jeweils ein anzulegendes Eingangsabbild und ein nach Anlegen des Eingangsabbildes erwartetes Ausgangsabbild definieren, wobei das erwartete Ausgangsabbild durch den jeweils erreichten Zustand definiert ist.

3. Verfahren nach Anspruch 2, wobei wenigstens einem Zustand eine Vorschrift zugeordnet ist, mittels der das durch den Zustand definierte erwartete Ausgangsabbild in Abhängigkeit des jeweils angelegten Eingangsabbildes ermittelbar ist.

4. Verfahren nach einem der vorstehenden Ansprüche, wobei zum Erzeugen der Testfälle für jeden Zustand die kürzeste mit dem ersten Eingangsabbild endende Folge von Eingangsabbildern ermittelt wird, mit welcher der Zustand vom Startzustand erreichbar ist.

5. Verfahren nach einem der vorstehenden Ansprüche, wobei wenigstens einem Zustand ein zeitabhängiges Verhalten zugeordnet wird und in Abhängigkeit des zeitabhängigen Verhaltens wenigstens zwei Testfälle für diesen Zustand und für jede Kombination eines ersten und eines zweiten Eingangsabbildes erzeugt werden, sofern der Zustand vom Startzustand durch eine mit dem ersten Eingangsabbild endende Folge von Eingangsabbildern erreichbar ist.

6. Verfahren nach Anspruch 5, wobei das zeitabhängige Verhalten des Zustands durch wenigstens eine Schaltzeit definiert ist und für jede definierte Schaltzeit wenigstens ein Testfall mit einer zugeordneten Wartezeit, die kürzer als die Schaltzeit ist, und wenigstens ein Testfall mit einer zugeordneten Wartezeit, die länger als die Schaltzeit ist, erzeugt wird.

7. Verfahren nach einem der vorstehenden Ansprüche, wobei für wenigstens einen Eingang wenigstens eine Äquivalenzklasse definiert wird und dem Eingang die Menge der Eingangswerte in Abhängigkeit der wenigstens einen definierten Äquivalenzklasse zugeordnet wird.

8. Verfahren nach einem der vorstehenden Ansprüche, ferner umfassend die Schritte:
- Abarbeiten der erstellten Testfallliste (650) mittels eines Testautomaten, welcher mit einer speicherprogrammierbaren Steuerung (100) verbunden ist, dessen Programmierung den zu testenden Funktionsbaustein (130) umfasst, und
- Speichern der Testergebnisse in einem strukturierten Dateiformat.

9. Vorrichtung zum automatischen Erzeugen einer Testfallliste (650) zum Ausführen eines Tests eines Funktionsbausteins (130) einer speicherprogrammierbaren Steuerung (100), umfassend
- Mittel (510) zum automatischen Umwandeln eines mittels einer Modellierungssprache erstellten Modells (610) des zu testenden Funktionsbausteins (130) in ein Meta-Modell (620), wobei durch das Meta-Modell (620) ein Zustandsautomat mit einer Menge von Eingängen, einer Menge von Zuständen und einer Menge von Zustandsübergängen definiert wird, wobei
- ein Zustand als Startzustand definiert ist,
- jedem Eingang eine Menge von Eingangswerten zugeordnet ist,
- ein Zustandsübergang durch einen ersten und einen zweiten Zustand und durch eine Übergangsbedingung definiert ist, wobei der Zustandsautomat vom ersten in den zweiten Zustand wechselt, wenn die Übergangsbedingung erfüllt ist, und wobei ein Eingangsabbild jedem Eingang einen Eingangswert zuordnet,
- Mittel (510) zum Erzeugen von Testfällen, dazu ausgebildet, je einen Testfall für jede Kombination eines ersten und eines zweiten Eingangsabbildes und für jeden Zustand, welcher vom Startzustand durch eine mit dem ersten Eingangsabbild endende Folge von Eingangsabbildern erreichbar ist, zu erzeugen und
- Mittel (510) zum Erstellen einer von einem Testautomaten abarbeitbaren Testfallliste aus den erzeugten Testfällen.

10. Vorrichtung nach Anspruch 9, wobei die Mittel (510) zum Erzeugen von Testfällen dazu ausgebildet sind, für jeden Zustand die kürzeste mit dem ersten Eingangsabbild endende Folge von Eingangsabbildern zu ermitteln, mit welcher der Zustand vom Startzustand erreichbar ist.

11. Vorrichtung nach Anspruch 9 oder 10, wobei wenigstens einem Zustand ein zeitabhängiges Verhalten zugeordnet wird und die Mittel (510) zum Erzeugen von Testfällen dazu ausgebildet sind, in Abhängigkeit des zeitabhängigen Verhaltens wenigstens zwei Testfälle für diesen Zustand und für jede Kombination eines ersten und eines zweiten Eingangsabbildes zu erzeugen, sofern der Zustand vom Startzustand durch eine mit dem ersten Eingangsabbild endende Folge von Eingangsabbildern erreichbar ist.

12. Vorrichtung nach Anspruch 11, wobei das zeitabhängige Verhalten des Zustands durch wenigstens eine Schaltzeit definiert ist und die Mittel zum Erzeugen von Testfällen dazu ausgebildet sind, für jede definierte Schaltzeit wenigstens einen Testfall mit einer zugeordneten Wartezeit, die kürzer als die Schaltzeit ist, und wenigstens einen Testfall mit einer zugeordneten Wartezeit, die länger als die Schaltzeit ist, zu erzeugen.

13. Vorrichtung nach einem der Ansprüche 9 bis 12, wobei die Vorrichtung eine Benutzerschnittstelle (530) zur Definition wenigstens einer Äquivalenzklasse für wenigstens einen Eingang des Zustandsautomaten durch einen Benutzer, wobei die Festlegung der dem Eingang zugeordneten Menge der Eingangswerte in Abhängigkeit der wenigstens einen definierten Äquivalenzklasse erfolgt.

14. System zum Testen eines Funktionsbausteins einer speicherprogrammierbaren Steuerung, umfassend
- eine Vorrichtung zum automatischen Erzeugen einer Testfallliste gemäß einem der Ansprüche 9 bis 13, und
- einen Testautomaten, welcher dazu ausgebildet ist, einen Test einer mit dem Testautomaten verbundenen speicherprogrammierbaren Steuerung (100) durch Abarbeiten einer von der Vorrichtung zum automatischen Erzeugen einer Testfallliste erzeugten Testfallliste (650) auszuführen.

15. Digitales Speichermedium mit darauf gespeicherten Anweisungen, welche dazu ausgebildet sind, ein Verfahren gemäß einem der Ansprüche 1 bis 8 auszuführen, wenn sie auf einem Computer ausgeführt werden.
